(19) Europäisches Patentamt
European Patent Office
Office européen des brevets

(11) **EP 2 154 181 A1**

(12) **EUROPEAN PATENT APPLICATION**
published in accordance with Art. 153(4) EPC

(43) Date of publication:
**17.02.2010 Bulletin 2010/07**

(51) Int Cl.:
***C08J 7/00*** *(2006.01)*     ***C08J 3/28*** *(2006.01)*
***C08L 23/10*** *(2006.01)*

(21) Application number: **08740713.6**

(22) Date of filing: **21.04.2008**

(86) International application number:
**PCT/JP2008/057668**

(87) International publication number:
**WO 2008/139838 (20.11.2008 Gazette 2008/47)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **08.05.2007 JP 2007123012**

(71) Applicant: **Mitsui Chemicals, Inc.**
**Tokyo 105-7117 (JP)**

(72) Inventors:
• **UEHARA, Hiroshi**
**Ichihara-shi**
**Chiba 299-0108 (JP)**

• **NODA, Kiminori**
**Ichihara-shi**
**Chiba 299-0108 (JP)**
• **YAMAGUCHI, Masayoshi**
**Ichihara-shi**
**Chiba 299-0108 (JP)**

(74) Representative: **HOFFMANN EITLE**
**Patent- und Rechtsanwälte**
**Arabellastrasse 4**
**81925 München (DE)**

(54) **CROSSLINKED PRODUCT OF PROPYLENE POLYMER**

(57)     The present invention provides a crosslinked material of a propylene polymer (A) obtainable by crosslinking the propylene polymer (A) comprising a constitutional unit derived from propylene in an amount of not less than 50 mol%, and having a Shore D hardness of not more than 57 as measured in accordance with ASTM D 2240, and a thermal deformation of not more than 10% as measured at 180°C under a load of 1.1 Kg in accordance with JIS C3005. The crosslinked material of the propylene polymer (A) having the above composition and physical properties has high flexibility, and excellent heat resistance and excellent scratch resistance.

**Description**

TECHNICAL FIELD

The present invention relates to a crosslinked material of a propylene polymer. More specifically, the present invention relates to a crosslinked material obtainable by blending a crosslinking assistant with a propylene polymer and irradiating with an ionizing radiation.

TECHNICAL BACKGROUND

A propylene polymer is a material having more excellent heat resistance, mechanical strength and scratch resistance as compared with an ethylene polymer such as ethylene elastomer, and molded articles of the propylene polymer are open to utilization for various uses. For example, molded articles obtainable from general polypropylene are known to have excellent mechanical strength. Molded articles obtainable from the propylene polymer, particularly polypropylene have the above properties, but they are inferior in flexibility. The propylene polymer, furthermore, has a problem in that crosslinking thereof is difficult.

On this account, an ethylene polymer which is easily crosslinkable with a peroxide, silane or a electron beam is utilized for the use in need of high heat resistance. Crosslinked molded articles obtainable from the ethylene polymer have a problem in that they are inferior in scratch resistance.

For example, Patent document 1 discloses crosslinked molded articles obtainable by crosslinking an ethylene copolymer composition containing an ethylene/1-butene copolymer with an electron beam, and having properties that they are suitable for uses in need of flexibility and elasticity as a stretching member, and have a low permanent strain and excellent balance between permanent strain and tensile strength.

Patent document 1: JP-A-2005-139212

DISCLOSURE OF THE INVENTION

SUBJECT TO BE SOLVED BY THE INVENTION

The crosslinked molded articles disclosed in Patent document 1, however, are still inferior in scratch resistance, and therefore, are difficult to be used for automobile parts, electric wires, etc.
It is an object of the invention to provide a crosslinked material of a propylene polymer having high flexibility, and excellent heat resistance and scratch resistance.

MEANS FOR SOLVING THE SUBJECT

The present inventors have been earnestly studied in order to solve the above subjects, and found that a crosslinked material of a propylene polymer having higher flexibility and more excellent heat resistance and scratch resistance as compared with those of a conventional polypropylene is obtainable using a specific propylene polymer. Thus, the present invention has been accomplished.

The present invention relates to the following characteristics [1] to [7].

[1] A crosslinked material of a propylene polymer (A) which material is obtainable by crosslinking the propylene polymer (A) comprising a constitutional unit derived from propylene in an amount of not less than 50 mol%, and has a Shore D hardness of not more than 57 as measured in accordance with ASTM D 2240, and a thermal deformation of not more than 10% as measured at 180°C under a load of 1.1 Kg in accordance with JIS C3005.

[2] The crosslinked material of the propylene polymer (A) according to [1] wherein the propylene polymer (A) comprises a constitutional unit derived from an α-olefin having 2 to 20 carbon atoms other than propylene in an amount of not less than 5 mol%.

[3] The crosslinked material of the propylene polymer (A) according to [1] wherein the propylene polymer (A) comprises a constitutional unit derived from propylene in an amount of 50 to 95 mol%, and a constitutional unit derived from an α-olefin having 2 to 20 carbon atoms other than propylene in an amount of 5 to 50 mol% provided that the total of the constitutional unit derived from propylene and the constitutional unit derived from an α-olefin having 2 to 20 carbon atoms other than propylene is 100 mol%.

[4] The crosslinked material of the propylene polymer (A) according to [1] which is obtainable by adding 0.1 to 5 parts by mass of a crosslinking assistant (B) to 100 parts by mass of the propylene polymer (A), followed by crosslinking.

[5] The crosslinked material of the propylene polymer (A) according to [4] wherein the crosslinking assistant (B) is triallyl cyanurate or triallyl isocyanurate.

[6] The crosslinked material of the propylene polymer (A) according to any one of [1] to [5], which material is obtainable by crosslinking the propylene polymer (A) with an electron ray.

[7] The crosslinked material of the propylene polymer (A) according to [6], which material is obtainable by molding a resin composition comprising the propylene polymer (A) and the crosslinking assistant (B) into a molded form and crosslinking the molded form with an electron ray.

EFFECT OF THE INVENTION

The crosslinked material of the propylene polymer (A) of the present invention has high flexibility, and excellent heat resistance and scratch resistance.

BEST MODE FOR CARRYING OUT THE INVENTION

The crosslinked material of the propylene polymer (A) of the present invention will be described below.
The crosslinked material of the propylene polymer (A) of the present invention is obtainable by crosslinking the following propylene polymer (A) and has a Shore D hardness as measured in accordance with ASTM D 2240, and a thermal deformation as measured at 180°C under a load of 1.1 Kg in accordance with JIS C3005, in specific ranges.

<Propylene polymer (A)>

The propylene polymer (A) used in the invention has a content of a constitutional unit derived from propylene of not less than 50 mol%. Examples thereof are a propylene homopolymer and a copolymer of propylene and an $\alpha$-olefin having 2 to 20 carbon atoms other than propylene. An $\alpha$-olefin having 2 to 20 carbon atoms other than propylene indicates an $\alpha$-olefin comprising ethylene having 2 to 20 carbon atoms other than propylene.

Specific examples of an $\alpha$-olefin having 2 to 20 carbon atoms other than propylene are ethylene, 1-butene, 1-pentene, 1-hexene, 4-methyl-1-pentene, 1-octene, 1-decene, 1-dodecene, 1-tetradecene, 1-hexadecene, 1-octadecene and 1-eicosene. Of these, ethylene and an $\alpha$-olefin having 4 to 20 carbon atoms are preferred, and further ethylene and an $\alpha$-olefin having 4 to 10 carbon atoms are more preferred. These may be used singly or two or more may be combined for use.

These $\alpha$-olefins may form a random copolymer with propylene, and further may form a block copolymer. They preferably form a random copolymer because of obtained crosslinked materials having excellent flexibility and heat resistance.

The propylene polymer (A) has a content of the constitutional unit derived from propylene of not less than 50 mol%, preferably 50 to 95 mol%, more preferably 65 to 90 mol%, especially 70 to 90 mol% based on all the constitutional units. The propylene polymer (A) has a content of the constitutional unit derived from the $\alpha$-olefin of usually not less than 5 mol%, preferably 5 to 50 mol%, more preferably 10 to 35 mol%, especially 10 to 30 mol% based on all the constitutional units. In the invention, the total of the constitutional unit derived from propylene and the constitutional unit derived from an $\alpha$-olefin having 2 to 20 carbon atoms is preferably 100 mol%.

The propylene polymer (A) has a melt flow rate MFR, as determined by ASTM D1238 at 230°C under a load of 2.16 Kg, of usually 0.1 to 50 g/10 min.
The propylene polymer (A) has a melting point, as measured in a differential scanning calorimeter (DSC), of usually lower than 120°C or not observed, preferably not more than 100°C or not observed. The case that the melting point is not observed indicates the fact a crystal melting peak having crystal melting enthalpy of not less than 1 J/g is not observed at a temperature of from -150 to 200°C. The measuring conditions are described in Examples. When the propylene polymer (A) has a melting point in the above range, it is possible to prepare a crosslinked material of the propylene polymer (A) having excellent balance between flexibility and mechanical strength. Furthermore, the crosslinked material has a merit of easiness in processability thereof because the surface tackiness of the crosslinked material is depressed.

The propylene polymer (A) has an intrinsic viscosity [η] of usually from 0.01 to 10 dl/g, preferably 0.05 to 10 dl/g. The intrinsic viscosity [η] is determined by dissolving a polymer specimen in decalin at 135°C and measuring a viscosity thereof using an Ubbellohde viscometer.

The propylene polymer (A) has a triad tacticity (mm fraction), as measured by $^{13}$C-NMR, of preferably not less than 85%, more preferably 85 to 97.5 %, more preferably 87 to 97%, especially 90 to 97 %. When the propylene polymer (A) has a triad tacticity (mm fraction) in the above range, it is possible to prepare a crosslinked material of the propylene polymer (A) having excellent balance between flexibility and mechanical strength. The mm fraction can be measured using a method described in WO-A-2004-087775 from line 7 on page 21 to line 6 on page 26.

The production method of the propylene polymer (A) is not particularly limited. The propylene polymer (A) can be prepared by homo-polymerizing propylene or copolymerizing propylene and the above $\alpha$-olefin in the presence of a known catalyst capable of stereoregular polymerizing an olefin in an isotactic structure or syndiotactic structure, for

3

example a catalyst which comprises a solid titanium component and an organic metal compound as main components, or a metallocene catalyst obtainable by using a metallocene compound as a catalyst component. Moreover, the propylene polymer (A) can be prepared by homo-polymerizing propylene or copolymerizing propylene and the above $\alpha$-olefin in the presence of a known catalyst capable of polymerizing an olefin in an atactic structure. The propylene polymer (A) can be preferably prepared by copolymerizing propylene and the above $\alpha$-olefin in the presence of the metallocene catalyst.

Examples of the propylene polymer (A) having the above properties may include a random copolymer (A-1) of propylene and an $\alpha$-olefin having 4 to 20 carbon atoms, and a random copolymer (A-2) of propylene, ethylene and an $\alpha$-olefin having 4 to 20 carbon atoms.

The random copolymer (A-1) of propylene and an $\alpha$-olefin having 4 to 20 carbon atoms, and the random copolymer (A-2) of propylene, ethylene and an $\alpha$-olefin having 4 to 20 carbon atoms preferably used in the present invention will be described below.

«Random copolymer (A-1) of propylene and an $\alpha$-olefin having 4 to 20 carbon atoms»

The random copolymer (A-1) of propylene and an $\alpha$-olefin having 4 to 20 carbon atoms preferably used in the invention is a random copolymer containing a constitutional unit derived from propylene and a constitutional unit derived from an $\alpha$-olefin having 4 to 20 carbon atoms and satisfies the following properties (a1) and (b1).

(a1) The molecular weight distribution (Mw/Mn), as measured by Gel permeation chromatography (GPC), is 1 to 3.
(b1) The melting point (Tm) (°C) and the content M (mol%) of the constitutional unit derived from an $\alpha$-olefin having 4 to 20 carbon atoms, as determined by $^{13}$C-NMR spectrum, satisfy the following formula (i).

$$146 \exp(-0.022M) \geq Tm \geq 125 \exp(-0.032M) \quad (i)$$

The melting point (Tm) of the random copolymer (A-1) of propylene and an $\alpha$-olefin having 4 to 20 carbon atoms is measured by DSC in the following manner. (1) A specimen is packed in an aluminum pan and the temperature thereof is elevated to 200°C at rate of 100°C/min and kept at 200°C for 5 min. (2) Thereafter, the temperature is lowered to -150°C at a rate of 10°C/min. (3) Subsequently, the temperature is elevated to 200°C at a rate of 10°C/min. The temperature of an endothermic peak, observed in the step (3), is the melting point (Tm). The melting point (Tm) is usually lower than 120°C, preferably lower than or equal to 100°C, more preferably 40 to 95°C, furthermore preferably 50 to 90°C. When the melting point (Tm) falls in the above range, it is possible to prepare a crosslinked material having excellent balance between flexibility and strength. Moreover, the resulting crosslinked material has a merit such that the processing thereof is easy because the surface tackiness of the crosslinked material is depressed.

In the random copolymer (A-1) of propylene and an $\alpha$-olefin having 4 to 20 carbon atoms, the content of the constitutional unit derived from propylene is usually 50 to 95 mol%, preferably 65 to 90 mol%, more preferably 70 to 90 mol%. The content of the constitutional unit derived from an $\alpha$-olefin having 4 to 20 carbon atoms is usually 5 to 50 mol%, preferably 10 to 35 mol%, more preferably 10 to 30 mol%. Hereupon, the total of the constitutional unit derived from propylene and the constitutional unit derived from an $\alpha$-olefin having 4 to 20 carbon atoms is preferably 100 mol%. As an $\alpha$-olefin having 4 to 20 carbon atoms, 1-butene is preferably used.

The random copolymer (A-1) of propylene and an $\alpha$-olefin having 4 to 20 carbon atoms is obtainable by, for example, a method described in the pamphlet of WO-A-2004-087775.

«Random copolymer (A-2) of propylene, ethylene and an $\alpha$-olefin having 4 to 20 carbon atoms»

The random copolymer (A-2) of propylene, ethylene and an $\alpha$-olefin having 4 to 20 carbon atoms preferably used in the invention is a random copolymer containing a constitutional unit derived from propylene, a constitutional unit derived from ethylene and a constitutional unit derived from an $\alpha$-olefin having 4 to 20 carbon atoms and satisfies the following properties (a2) and (b2).

(a2) The molecular weight distribution (Mw/Mn), as measured by Gel permeation chromatography (GPC), is 1 to 3.
(b2) The content of a constitutional unit derived from propylene is 50 to 85 mol%, the content of a constitutional unit derived from ethylene is 5 to 30 mol% and the content of a constitutional unit derived from an α-olefin having 4 to 20 carbon atoms is 5 to 30 mol%. Hereupon, the total of the constitutional unit derived from propylene, the constitutional unit derived from ethylene and the constitutional unit derived from an α-olefin having 4 to 20 carbon atoms is preferably 100 mol%. Moreover, the total of the constitutional unit derived from ethylene and the constitutional unit derived from an α-olefin having 4 to 20 carbon atoms is preferably 50 to 15 mol%.

With regard to the amounts of the constitutional unit derived from propylene, the constitutional unit derived from ethylene and the constitutional unit derived from an α-olefin having 4 to 20 carbon atoms, the random copolymer (A-2) contains the constitutional unit derived from propylene in an amount of preferably 60 to 82 mol%, more preferably 61 to 75 mol%, the constitutional unit derived from ethylene in an amount of 5 to 20 mol%, more preferably 5 to 15 mol% and the constitutional unit derived from an α-olefin having 4 to 20 carbon atoms in an amount of preferably 5 to 20 mol%, more preferably 10 to 24 mol%. Particularly, as an α-olefin having 4 to 20 carbon atoms, 1-butene is preferably used.

The melting point (Tm) (°C) of the random copolymer (A-2) of propylene, ethylene and an α-olefin having 4 to 20 carbon atoms as determined by DSC, is usually lower than 120°C, preferably lower than 100°C or not observed. The melting point measurement can be carried out in the method same as in the random copolymer (A-1).

The random copolymer (A-2) of propylene, ethylene and an α-olefin having 4 to 20 carbon atoms is obtainable by, for example, a method described in the pamphlet of WO-A-2004-087775.

<Crosslinking assistant (B)>

The crosslinked material of the propylene polymer (A) according to the present invention is preferably obtainable by blending the crosslinking assistant (B) with the propylene polymer (A) and crosslinking.

Examples of the crosslinking assistant (B) are preferably sulfur, p-quinone dioxime, p,p'-dibenzoyl quinonedioxime, N-methyl-N-4-dinitroso aniline, nitroso benzene, diphenyl guanidine, trimethylol propane-N,N'-m-phenylene dimaleimide, divinyl benzene, triallyl cyanurate (TAC) and triallyl isocyanurate (TAIC). Further examples thereof may include polyfunctional methacrylate monomers such as ethylene glycol dimethacrylate, diethylene glycol dimethacrylate, polyethylene glycol dimethacrylate, trimethylol propane trimethacrylate and allyl methacrylate; and polyfunctional vinyl monomers such as vinyl butylate and vinyl stearate. Among them, triallyl cyanurate (TAC) and triallyl isocyanurate (TAIC) are preferred.

The crosslinking assistant of the present invention is added in an amount of usually 0.1 to 5 parts by mass, preferably 0.5 to 5 parts by mass, more preferably 0.5 to 4 parts by mass based on 100 parts by mass of the propylene polymer (A). When the amount of the crosslinking assistant (B) is in the above range, the effect thereof on crosslinking is high and it is possible to prepare the crosslinked material of the propylene polymer (A) having excellent heat resistance.

<Crosslinked material of Propylene polymer (A)>

The crosslinked material of the propylene polymer (A) according to the present invention is obtainable by crosslinking the propylene polymer (A), and the composition of the resin components of the crosslinked material, that is, the kind and the content of a constitutional unit derived from each monomer excluding the constitutional unit derived from the crosslinking assistant (B) are the same as those in the propylene polymer (A).

Examples of the polymer which constitutes the crosslinked material of the propylene polymer (A) may include a propylene homopolymer and a copolymer of propylene and an α-olefin having 2 to 20 carbon atoms except for propylene. Examples of the α-olefin having 2 to 20 carbon atoms except for propylene are α-olefins having 2 to 20 carbon atoms containing ethylene except for propylene.

Examples of the α-olefin having 2 to 20 carbon atoms except for propylene, which constitutes the crosslinked material of the propylene polymer (A) may include ethylene, 1-butene, 1-pentene, 1-hexene, 4-methyl-1-pentene, 1-octene, 1-decene, 1-dodecene, 1-tetradecene, 1-hexadecene, 1-octadecene and 1-eicosene. Of these, ethylene and an α-olefin having 4 to 20 carbon atoms are preferred, and further, ethylene and an α-olefin having 4 to 10 carbon atoms are more preferred. In the crosslinked material of the propylene polymer (A), these α-olefins may form a random copolymer or a block copolymer together with propylene, and preferably form a random copolymer.

The constitutional unit derived from propylene is contained in an amount of not less than 50 mol%, preferably 50 to 95 mol%, more preferably 65 to 90 mol%, specifically 70 to 90 mol% based on the total of the constitutional units of the crosslinked material of the propylene polymer (A). The constitutional unit derived from the α-olefin is contained in an amount of usually not less than 5 mol%, preferably 5 to 50 mol%, more preferably 10 to 35 mol%, specifically 10 to 30 mol% based on the total of the constitutional units of the crosslinked material of the propylene polymer (A). Hereupon, the total of the constitutional unit derived from propylene and the constitutional unit derived from an α-olefin having 2 to 20 carbon atoms is preferably 100 mol%, and the constitutional unit derived from the crosslinking assistant (B) is not considered.

To the crosslinked material of the propylene polymer (A) according to the present invention, other synthetic resins, other rubbers, and additives such as an antioxidant, a heat stabilizer, a weather stabilizer, a slipping agent, an anti-blocking agent, a crystal nucleating agent, a pigment, a hydrochloric acid adsorbent and a copper harm inhibitor may be added if necessary within not missing the object of the invention. These may be added before crosslinking of the propylene polymer (A) or after crosslinking thereof. The amounts of the other synthetic resins, other rubbers and additives added are not particularly limited within not missing the object of the invention. For example, before crosslinking, they are added in an amount of usually 0 to 40 % by mass, preferably 0 to 20 % by mass based on the amount of the propylene polymer (A).

<Physical properties of Crosslinked material of Propylene polymer (A)>

The crosslinked material of the propylene polymer (A) has a Shore D hardness as a surface hardness of not more than 57, preferably not more than 55, more preferably not more than 54. The Shore D hardness can be determined using a D type measuring device in accordance with ASTM D 2240 by contacting an indenter point on the surface of a specimen prepared by press molding and immediately reading the point off.

The crosslinked material of the propylene polymer (A) has a thermal deformation of not more than 10 %, preferably not more than 9 %. The thermal deformation can be determined by preparing a sheet having a thickness of 2 mm by means of a press molding machine in accordance with ASTM D2240, and measuring using the sheet at 180°C under a load of 1. 1 Kg in accordance with JIS C3005.

The crosslinked material of the propylene polymer (A) has a wearing loss, which is a standard for evaluating the scratch resistance, of preferably not more than 1.2 mg, more preferably not more than 1.1 mg. The scratch resistance can be determined in the following manner. A specimen having a length of 40 mm, a width of 1/4 inch and a thickness of 3 mm is prepared by a press-molding machine. When using a scrape wearing testing machine manufactured by Yasuda Seiki Co., Ltd, the surface of the specimen is rubbed by a music wire having a tip shape of 0.45 mm$\phi$ mounted on the top of a wearing indenter made of SUS on which a 700 g weight is put, the mass of the specimen is measured before and after the rubbing and the mass difference can be determined as the wearing loss. The testing is carried out at room temperature in the conditions that the number of reciprocating rubbing is 1000 times, the reciprocating rate is 60 times/min, and the stroke is 10 mm. The smaller the value of the wearing loss is, the more excellent the scratch resistance is.

[Production method of the crosslinked material of Propylene polymer (A)]

The production method of the crosslinked material of the propylene polymer (A) according to the present invention is not particularly limited. For example, the propylene polymer (A), the crosslinking assistant (B) and optionally the above other components are blended and mechanically mixed using an extruder or a kneader, and usually crosslinked by irradiation with a prescribed amount of an ionizing radiation to prepare the crosslinked material of the propylene polymer (A). More specifically, the propylene polymer (A), the crosslinking assistant (B) and optionally the above other components are blended to prepare a resin composition, the resin composition is molded into a molded form, and the molded form is crosslinked by irradiation with a prescribed amount of an ionizing radiation to prepare the crosslinked material of the propylene polymer (A). Examples of the molding method may include conventionally known methods such as injection molding, extrusion molding, vacuum molding, inflation molding, calender molding and blow molding. The shape of the molded form may include a sheet, a film or the like.

As the ionizing radiation, α-ray, β-ray, γ-ray, electron ray, neutron ray and X-ray are used. Of these rays, γ-ray emitted by cobalt-60, and electron ray are more suitable, and particularly, electron ray is suitable. The exposure dose of the ionizing radiation depends on the kind thereof. When electron ray is used as the ionizing radiation, the exposure dose is usually 10 to 300 kGy, preferably 20 to 250 kGy. Using these ionizing radiations, it is possible to prepare the crosslinked material of the propylene polymer (A) having excellent heat resistance.

The crosslinked material of the propylene polymer (A) according to the present invention can be suitably utilized for industrial materials such as car parts, car interior materials, surface skin materials etc, footwear such as soles, sandals etc, molded articles in need of high heat resistance such as civil engineering materials, foaming sheet materials, convenience goods, electric wires, etc.

EXAMPLES

Hereinafter, the present invention will be described based on the following examples, but the present invention should not be limited by these examples.

<Propylene polymer (A)>

A propylene/1-butene copolymer (PBR) (MFR: 7 g/10 min, Tm: 75°C, the content of a constitutional unit derived from 1-butene: 26 mol%, Mw/Mn: 2.1 and the crystallinity as determined by WAXD method: 28%) was used as a propylene/1-butene copolymer (A-1).

A propylene/ethylene/1-butene copolymer (PBER) (MFR: 5.5 g/10 min, Tm: 73°C, the content of a constitutional unit derived from 1-butene: 24 mol%, the content of a constitutional unit derived from ethylene: 6 mol%, Mw/Mn: 2.1 and the crystallinity as determined by WAXD method: 26%) was used as a propylene/ethylene/1-butene copolymer (A-2).

<Crosslinking assistant (B)>

As the crosslinking assistant (B), triallyl isocyanurate (TAIC) was used.

<Isotactic block polypropylene (b-PP) (C)>

As an isotactic block polypropylene (C), a propylene/ethylene block copolymer (Tm: 160°C, MFR as determined at 230°C under a load of 2.16 Kg: 0.5 g/10 min, the content of a constitutional unit derived from ethylene: 14.3 mol%, the amount of a component soluble in n-decane: 12 % by mass) was used.

<Ethylene polymer (D)>

As an ethylene polymer (D), a linear low-density polyethylene (LLDPE) (density: 923 kg/m$^3$, and MFR as determined at 190°C under a load of 2.16 kg: 2.0 g/10 min) was used.

<Peroxide (E)>

As a peroxide (E), dicumyl peroxide (DCP) was used.

<Measuring Methods on physical properties of each component>

The physical properties of each component were determined by the following manners.
(1) The contents of the constitutional unit derived from ethylene and the constitutional unit derived from 1-butene were determined by analysis with $^{13}$C-NMR spectrum.
(2) Melt flow rate (MFR)
The melt flow rate was determined at 230°C under a load of 2.16 kg in accordance with ASTM D-1238.

(3) Melting point (Tm)

The exothermic and endothermic curve was determined using a differential scanning calorimeter (DSC), and a melting peak having ΔH of not less than 1 J/g during temperature elevation was measured. The temperature at the peak was taken as the melting point (Tm).

A specimen was packed in an aluminum pan, and the temperature was elevated to 200°C at a rate of 100°C/min and was kept for 5 min. Thereafter, the temperature was decreased to -150°C at a rate of 10°C/min, and then elevated to 200°C at a rate of 10°C/min. During this temperature elevation, the melting point (Tm) was determined from the exothermic and endothermic curve.

(4) Molecular weight distribution (Mw/Mn)

The molecular weight distribution was measured at 140°C using an orthodichlorobenzene solvent by a GPC (gel permeation chromatography) relative to polystyrene.

(5) Crystallinity

The crystallinity was determined using CuKα as an X-ray source and RINT 2500 (manufactured by Rigaku Co., Ltd) as a measuring device by wide-angle X-ray profile analysis.

<Items for Evaluation of Crosslinked material>

(1) Shore D hardness

The Shore D hardness was measured in accordance with ASTM D2240.

(2) Thermal deformation

A sheet having a thickness of 2 mm was prepared using a press molding machine in accordance with ASTM D 2240, and the thermal deformation was measured using the sheet at 180°C under a load of 1.1 kg in accordance with JIS C3005.

(3) Scratch resistance

The scratch resistance was evaluated in the following manner. A specimen having a length of 40 mm, a width of 1/4 inch and a thickness of 3 mm was prepared by a press-molding machine. When using a scrape wearing testing machine manufactured by Yasuda Seiki Co. , Ltd, the surface of the specimen was rubbed by a music wire having a tip shape of 0. 45 mm$\phi$ mounted on the top of a wearing indenter made of SUS on which a 700 g weight was put, the mass of the specimen was measured before and after the rubbing and the mass difference was determined as the wearing loss.

Examples 1 to 4

In each example, a resin composition prepared by blending the components as shown in Table 1 was kneaded using a laboplastmill (manufactured by Toyo Seiki Co., Ltd), and then molded into a sheet having a thickness of 2 mm using a press molding machine (heating: 190°C, 7 min, cooling: 15°C, 4 min, and cooling rate: about 40°C/min).
Subsequently, the resulting sheet was irradiated with electron ray at an accelerating voltage of 2000 kV at an electron ray dose of 100 kGy in the air to prepare a crosslinked material.
Regarding the resulting crosslinked material, the Shore D hardness, thermal deformation and wearing loss (scratch resistance) were evaluated. The evaluation results are shown in Table 1.

Comparative Examples 1 to 4

In each comparative example, the procedure of Example 1 was repeated except that a resin composition prepared by blending the components as shown in Table 1 was used, and crosslinking by irradiation with electron ray was not carried out. The evaluation results are shown in Table 1.

Comparative Examples 5 and 6

In each comparative example, the procedure of Example 1 was repeated except that the propylene polymer (A) was replaced by isotactic block polypropylene (C), and a resin composition prepared by blending the components as shown in Table 2 was used, and thereby a crosslinked material was prepared and evaluated. The evaluation results are shown in Table 2.

Comparative Examples 7 and 8

In each comparative example, the procedure of Example 1 was repeated except that the propylene polymer (A) was replaced by isotactic block polypropylene (C), a resin composition prepared by blending the components as shown in Table 2 was used, and irradiation with electron ray was not carried out. The evaluation results are shown in Table 2.

Comparative Example 9

A resin composition prepared by blending the components as shown in Table 2 was kneaded by two rolls set at 120°C, to prepare a sheet. Thereafter, the sheet was pressurized with heat by a press molding machine heated at 160°C for 30 min, to prepare a material crosslinked by the peroxide (E)
Subsequently, the resulting crosslinked material was evaluated in the same manner in Example 1. The evaluation results are shown in Table 2.

Comparative Example 10

The procedure of Example 1 was repeated except that the propylene polymer (A) was replaced by an ethylene polymer (D), and a resin composition prepared by blending the components as shown in Table 2 was used, and thereby a crosslinked material was prepared and evaluated. The evaluation results are shown in Table 2.

Referential Examples 1 and 2

In each referential example, the procedure of Example 1 was repeated except that the propylene polymer (A) as shown in Table 2 was only used and the crosslinking assistant (B) was not used, and thereby a crosslinked material was prepared and evaluated. The evaluation results are shown in Table 2.
Table 1

|  | unit | Example | | | | Comparative Example | | | |
|---|---|---|---|---|---|---|---|---|---|
|  |  | 1 | 2 | 3 | 4 | 1 | 2 | 3 | 4 |
| Propylene polymer (A-1) | parts by mass | 100 | 100 |  |  | 100 | 100 |  |  |
| Propylene polymer (A-2) | parts by mass |  |  | 100 | 100 |  |  | 100 | 100 |
| Crosslinking assistant (B) | parts by mass | 1.2 | 2.4 | 1.2 | 2.4 | 1.2 | 2.4 | 1.2 | 2.4 |
| b-PP (C) | parts by mass |  |  |  |  |  |  |  |  |
| Ethylene polymer (D) | parts by mass |  |  |  |  |  |  |  |  |
| Peroxide (E) | parts by mass |  |  |  |  |  |  |  |  |
| Dose of electron irradiation | kGy | 100 | 100 | 100 | 100 | 0 | 0 | 0 | 0 |
| Shore D hardness (surface hardness) | - | 53 | 54 | 52 | 52 | 52 | 52 | 51 | 51 |
| Thermal deformation | % | 8.4 | 7.1 | 7.8 | 6.7 | molten | molten | molten | molten |
| Wearing loss | mq | 1.2 | 1.1 | 1.2 | 1.1 | 1.3 | 1.3 | 1.6 | 1.6 |

Table 2

|  | unit | Comparative Example | | | | | | Referential Example | |
|---|---|---|---|---|---|---|---|---|---|
|  |  | 5 | 6 | 7 | 8 | 9 | 10 | 1 | 2 |
| Propylene polymer (A-1) | parts by mass |  |  |  |  | 100 |  | 100 |  |
| Propylene polymer (A-2) | parts by mass |  |  |  |  |  |  |  | 100 |
| Crosslinking assistant (B) | parts by mass | 1.2 | 2.4 | 1.2 | 2.4 | 2.4 | 2.4 |  |  |
| b-PP (C) | parts by mass | 100 | 100 | 100 | 100 |  |  |  |  |
| Ethylene polymer (D) | parts by mass |  |  |  |  |  | 100 |  |  |
| Peroxide (E) | parts by mass |  |  |  |  | 0.6 |  |  |  |
| Dose of electron irradiation | kGy | 100 | 100 | 0 | 0 | 0 | 100 | 100 | 100 |
| Shore D hardness (surface hardness) | - | 60 | 62 | 59 | 59 | 51 | 40 | 52 | 51 |

(continued)

| | unit | Comparative Example | | | | | | Referential Example | |
|---|---|---|---|---|---|---|---|---|---|
| | | 5 | 6 | 7 | 8 | 9 | 10 | 1 | 2 |
| Thermal deformation | % | 17.7 | 14.0 | molten | molten | molten | 7.0 | 56.3 | 51.8 |
| Wearing loss | mg | 1.2 | 1.1 | 1.3 | 1.3 | 1.5 | 2.3 | 1.3 | 1.4 |

In Tables 1 and 2, the expression "molten" indicates that, the initial shape of the specimen was not kept at 180°C at the time of measuring the thermal deformation because the heat resistance of the specimen was insufficient and therefore, the thermal deformation thereof was not measured.

It is clear that the crosslinked material of the propylene polymer (A) according to the present invention has excellent flexibility because of having a low Shore D hardness, it also has excellent heat resistance because of having a small thermal deformation, and it, furthermore, has excellent scratch resistance because of having a low wearing loss.

POSSIBILITY OF INDUSTRIAL USE

The crosslinked material of the propylene polymer (A) according to the present invention can be suitably utilized for industrial materials such as car parts, car interior materials, surface skin materials etc, footwear such as soles, sandals etc, molded articles in need of high heat resistance such as civil engineering materials, foaming sheet materials, convenience goods, electric wires, etc.

**Claims**

1. A crosslinked material of a propylene polymer (A) which material is obtainable by crosslinking the propylene polymer (A) comprising a constitutional unit derived from propylene in an amount of not less than 50 mol%, and has a Shore D hardness of not more than 57 as measured in accordance with ASTM D 2240, and a thermal deformation of not more than 10% as measured at 180°C under a load of 1.1 Kg in accordance with JIS C3005.

2. The crosslinked material of the propylene polymer (A) according to claim 1 wherein the propylene polymer (A) comprises a constitutional unit derived from an $\alpha$-olefin having 2 to 20 carbon atoms other than propylene in an amount of not less than 5 mol%.

3. The crosslinked material of the propylene polymer (A) according to claim 1 wherein the propylene polymer (A) comprises a constitutional unit derived from propylene in an amount of 50 to 95 mol%, and a constitutional unit derived from an $\alpha$-olefin having 2 to 20 carbon atoms other than propylene in an amount of 5 to 50 mol% provided that the total of the constitutional unit derived from propylene and the constitutional unit derived from an $\alpha$-olefin having 2 to 20 carbon atoms other than propylene is 100 mol%.

4. The crosslinked material of the propylene polymer (A) according to claim 1 which is obtainable by adding 0.1 to 5 parts by mass of a crosslinking assistant (B) to 100 parts by mass of the propylene polymer (A), followed by crosslinking.

5. The crosslinked material of the propylene polymer (A) according to claim 4, wherein the crosslinking assistant (B) is triallyl cyanurate or triallyl isocyanurate.

6. The crosslinked material of the propylene polymer (A) according to any one of claims 1 to 5, which is obtainable by crosslinking the propylene polymer (A) with an electron ray.

7. The crosslinked material of the propylene polymer (A) according to claim 6 which is obtainable by molding a resin composition comprising the propylene polymer (A) and the crosslinking assistant (B) into a molded form and crosslinking the molded form with an electron ray.

## INTERNATIONAL SEARCH REPORT

| | International application No. |
|---|---|
| | PCT/JP2008/057668 |

A. CLASSIFICATION OF SUBJECT MATTER
*C08J7/00*(2006.01)i, *C08J3/28*(2006.01)i, *C08L23/10*(2006.01)i

According to International Patent Classification (IPC) or to both national classification and IPC

B. FIELDS SEARCHED

Minimum documentation searched (classification system followed by classification symbols)
C08J7/00-02, 12-18, C08J3/00-28, C08L23/00-36, B29C71/04

Documentation searched other than minimum documentation to the extent that such documents are included in the fields searched
Jitsuyo Shinan Koho          1922-1996    Jitsuyo Shinan Toroku Koho    1996-2008
Kokai Jitsuyo Shinan Koho    1971-2008    Toroku Jitsuyo Shinan Koho    1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 11-80378 A   (Sumitomo Electric Industries, Ltd.),<br>26 March, 1999 (26.03.99),<br>Claims; Par. Nos. [0001], [0011], [0012], [0020]; examples<br>(Family: none) | 1-7<br>1-7 |
| A | JP 57-172926 A  (The Furukawa Electric Co., Ltd.),<br>25 October, 1982 (25.10.82),<br>Full text<br>(Family: none) | 1-7 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>07 May, 2008 (07.05.08) | Date of mailing of the international search report<br>20 May, 2008 (20.05.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/057668

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-501297 A  (Raychem Corp.),<br>03 February, 1998 (03.02.98),<br>Full text<br>& EP 764182 A1          & WO 1995/034597 A1<br>& CA 2192546 A | 1-7 |
| A | WO 2002/022343 A1  (Sekisui Chemical Co., Ltd.),<br>21 March, 2002 (21.03.02),<br>Full text<br>& US 2003/0175539 A1    & EP 1329303 A1<br>& CA 2421642 A | 1-7 |
| A | JP 2002-97284 A  (Mitsui Chemicals, Inc.),<br>02 April, 2002 (02.04.02),<br>Full text<br>(Family: none) | 1-7 |
| Y | WO 2004/087775 A1  (Mitsui Chemicals, Inc.),<br>14 October, 2004 (14.10.04),<br>Full text<br>& US 2006/0276607 A1    & EP 1614699 A1<br>& KR 2005-0118208 A      & CN 1759128 A | 1-7 |

Form PCT/ISA/210 (continuation of second sheet) (April 2007)

## REFERENCES CITED IN THE DESCRIPTION

**Patent documents cited in the description**

- JP 2005139212 A

- WO 2004087775 A